# EUROPEAN PATENT SPECIFICATION

(11) **EP 2 021 716 B1**
(45) Date of publication and mention of the grant of the patent: **27.05.2020**
(21) Application number: 06820714.1
(22) Date of filing: 28.11.2006
(51) Int. Cl.: F23M 5/02, F23M 20/00, F27D 5/00, C21D 9/00, F23M 5/04

(54) **CERAMIC ASSEMBLY**
KERAMIKANORDNUNG
ENSEMBLE CÉRAMIQUE

(30) Priority: 11.05.2006 HU 0600399
(43) Date of publication of application: 11.02.2009
(73) Proprietor: IMERTECH SAS, 75015 Paris (FR)
(72) Inventor: SCHLEIFFER, Ervin, 6800 Hódmezövásárhely (HU); SONNTAG, Andreas, 83512 Wasserburg am Inn (DE); KISS, Sándor, 6800 Hódmezövásárhely (HU); VETRÓ, Ádám, 6800 Hódmezövásárhely (HU)
(74) Representative: Haseltine Lake Kempner LLP
(86) International application number: PCT/HU2006/000104
(87) International publication number: WO 2007/132276

(56) References cited:
- EP-A1- 0 518 746
- EP-A1- 1 596 145
- WO-A-97/09577
- DE-A1- 2 537 501
- DE-U1- 20 319 600
- GB-A- 534 546
- US-B1- 6 318 571

## Description

The invention relates to a ceramic assembly consisting of a sheet-like ceramic base element and at least one functional auxiliary element also made of ceramics and connected to the base element. The ceramic assembly is primarily used for supporting the products to be fired or to be thermally treated in a kiln.

According to the current practice of firing fine or heavy-clay ceramic products, racks are needed to construct from the kiln furniture in every case where the firing space is to be separated in different levels, wherein the kiln furniture used to carry or support the products to be fired has either an own monolithic leg, or individual supports and spacers are used to provide the appropriate distance between the sheet-like members of the kiln furniture arranged one above the other. The height level of the leg or the support is always matched to the height level of the product to be fired so as to provide proper firing conditions. When the height level of the product to be fired may vary, or in particular when one seeks to achieve the maximum utilization of the firing capacity in the production of a large series, furthermore when a modern automatic handling system is required to use, kiln furniture with monolithic legs of different height levels would be needed. In case of kiln furniture members separated from each other by supports or spacers, it is possible and usual to modify the height level by the use of another support or spacer with a different height level, but due to the instability of such supports or spacers, application of an automatic handling system may be problematic.

Depending on the conditions of use, both solutions have some advantages and drawbacks when comparing one to the other. Hence, one cannot declare definitely that either solution would be better than the other one, since the conditions of use are basically determinant. Advantages of kiln furniture members with monolithic legs include the massive construction, the stability of the stacks formed from the kiln furniture and the simple manipulation capability. The drawbacks include, however, the more complicated manufacturing, the unchangeable height level of the legs and that it is not possible to use different material qualities within one kiln furniture member corresponding to the particular function (supporting, spacing, etc.) of the different parts of the kiln furniture.

The advantages of the kiln furniture members with separate supports include the simpler manufacturing, the flexibility in changing the height level, and that the components of the system may have different material qualities. The drawbacks include, however, the reduced massiveness of the assembly consisting of the kiln furniture members and the supports, the reduced stability of the stacks of kiln furniture and that the kiln furniture members and the supports are difficult to manipulate together.

For firing the ceramic products belonging to a certain product group, in particular dishes and other products with similar shape, round and flat base elements made of SiC (silicon carbide) are often used as kiln furniture members, said base elements being arranged on longitudinal supports also made of SiC. The longitudinal supports and the base elements together form racks, wherein a multiple level rack system may be constructed by placing the longitudinal supports onto bearing posts. US 6,318,571 B1 describes a ceramic support.

The problem arising in connection with such a kiln furniture is that at the very high operating temperature (for example 1380°C), the surface of the sheet-like base elements and the longitudinal supports tends to oxidize and thus a thin, viscous glass layer develops thereon, which results in that the base elements and the longitudinal supports may stick to each other and thus they might damage or even break at the separation thereof. Nevertheless, this kiln furniture is designed for at least one thousand high temperature operating cycles. So as to avoid sticking, one of the possible preventive measures is to cover the surface of the sheet-like base elements and that of the longitudinal supports with a so called engobe layer of Al₂O₃ (i.e. a dust layer adhering to the SiC surface), in particular on the side facing the product to be fired. However, the bottom side of the base elements is not recommended to be engobed since the dust particles used in the engobing process may fall onto the porcelain product below, thus making it unusable.

The invention is based on the recognition that the above object can be successfully achieved if the production of the sheet-like base element and the production of the functional auxiliary elements, which influence the function and/or the properties of the base element, are separated and the separately produced elements are subsequently fixed to each other by means of appropriate mechanical joints.

According to the inventive as described in independent claim 1, the above mentioned objects are achieved by providing a ceramic assembly consisting of a sheet-like ceramic base element and at least one ceramic functional auxiliary element connected to the base element, said ceramic assembly being particularly suitable for supporting products to be fired or to be thermally treated in a kiln, wherein at least one of said functional auxiliary elements is stably connected to the base element in a mechanical way by means of a positive connection (form-fitting joint) and/or a non-positive connection (force-fitting joint) and/or gluing. After completing the mechanical jointing or simultaneously with it, it is also possible to strengthen the joint by gluing. Alternatively, the joint may be created by using only the properly shaped functional auxiliary element, in particular a leg, and an initially fluid binder.

In several embodiments, an existing base element applied in former firing systems in which individual supports are used for layering, may be also utilized. In such cases, how to shape and to fix the leg, is always determined by the existing base element. For carrying the base element and for spacing between the base elements in the rack, a leg is used that is fixed to the base element by a separate binding element, wherein the joint may be additionally strengthened by gluing. Also in this embodiment, it is preferred that the leg comprises a slot for receiving a circumferential through-hole of a carrier plate forming the base element and the leg is further provided with through-holes aligned coaxially with respect to the through-hole of the carrier plate, wherein said through-holes are adapted to receive binding elements in the form of external threaded screws to be screwed therein.

In another preferred embodiment, for carrying the base element and for providing the proper spacing, the leg and the binding element fixing the leg to the base element are used together, thus combining the functions of fixing, spacing and supporting. In this embodiment, it is preferred that the leg is in the form of a flanged hollow piece with conical mantle, said hollow piece comprising an internal threaded hole adapted for receiving an external threaded central bolt of a binding element to be screwed into said internal threaded hole through the through-hole of the base element, said binding element being in the form of a disc, or alternatively, the leg is in the form of a flanged hollow piece with conical mantle, said hollow piece comprising an external threaded central bolt adapted for screwing into an internal threaded hole of a binding element through the through-hole of the base element, said binding element being in the form of a disc.

In alternative embodiment, wherein both of the base element and the leg are newly formed, i.e. they are not the parts of an existing system, it is preferred according to the invention that the base element, the leg and, if used, the binding element providing the joint have a special design for achieving the maximum stability and a massive joint.

In a further embodiment, for carrying the base element and for spacing between the base elements in the rack, a leg is used that is fixed to the base element by a separate binding element that, in turn, may be strengthened by gluing if necessary. The leg is preferably provided with a seat for receiving a shaped projection of the base element in a form-fitting manner, wherein an inset used as a binding element is imposed on the shaped projection, said inset having the same contour as the outer contour of the shaped projection and being made of the same material as that of the leg, wherein said inset, which is covered with a layer of glue on its outer periphery, is connected to the leg along its periphery by means of a non-positive connection.

In a preferred embodiment, the base element comprises weight reducing and ventilation cut-offs, and the ceramic assembly and the legs are made of a material having both thermal shock resistance and thermal creep resistance in high temperature with high durability, or the combination of such materials, wherein the ratio of the weight and the effective firing surface of the kiln furniture formed by the ceramic assembly is less than 4,0x10⁻³ g/mm². In this embodiment, the leg may comprise a slot for receiving a circumferential through-hole of the base element and may be further provided, in its top surface, with a plurality of glue feeding channels opening into the space above said through-hole. A positioning cam may be also formed on the top surface of the leg. Preferably, the structural material of the ceramic assembly is synthetic mullite and/or silicon carbide (SiC). The silicon carbide structural material is preferably provided with an oxide ceramics cover that contains ZrO₂ in an amount of at least 90%.

In another preferred embodiment, for carrying the base element and for providing the proper spacing, a leg is provided that is fixed to the base element by a joint formed solely by the glue. If necessary, the joint may be additionally strengthened by a positive connection (form-fitting joint) created by filling up the properly shaped hollows of the base element and the leg with a glue. In this embodiment, the leg preferably comprises a slot for receiving a circumferential through-hole of the base element and is further provided, in its top surface, with a plurality of glue feeding channels opening into the space above said through-hole, and preferably, a positioning cam is formed on the top surface of the leg.

In certain types of the kiln furniture members mainly used for firing dishes and other products with a similar shape, wherein the round base elements made of silicon carbide and used for carrying the product are accommodated on longitudinal supports made of a similar material, it is a preferred way of preventing the base elements and the longitudinal supports from sticking to each other to mount at least one ceramic antisticking inset, as a functional auxiliary element, onto the bottom of the base element and/or onto the top of the longitudinal support carrying the base element. The inset may be fixed by positive connection and/or non-positive connection and/or gluing. In a preferred embodiment, the antisticking inset is mounted to the bottom of the base element and provided with external threaded bolts traversing circumferential through-holes of the base element, wherein a plurality of internal threaded female screw-like discs are screwed to the external threaded bolts from the direction of the opposite side of the base element, or provided with other connecting studs mechanically secured or glued to the base element on its opposite side by means of suitable binding elements. Alternatively, the antisticking inset may be mounted, in a strap-like form-fitting manner, to the top of the longitudinal supports used for supporting the base element. The material of the antisticking ceramic inset is selected from the group of mullite containing, ZrO₂-containing and Al₂O₃-Containing materials.

It is preferred if the material of the base element is selected from the group of silicon carbide based materials. The material of the functional auxiliary elements is preferably selected from the group of silicon carbide based materials, alumina-silica based materials, cordierite-containing materials and zircon-silicate or zircon-dioxide based materials. The ceramic base element and the functional auxiliary element may have the same or different material quality.

The ceramic assemblies according to the invention are now described in more detail in connection with different embodiments illustrated in perspective views of the accompanying drawings, in which:
Figures 1a, 1b, 1c, 1d and 1e illustrate kiln furniture members that have been already used also in existing firing systems and the base elements of which have been formerly separated by individual supports, wherein the base element is now supported and the required spacing is provided merely by a leg mounted onto the base element by means of a binding element,
Figures 2a, 2b, 2c, 2d and 2e illustrate kiln furniture members that have been already used also in existing firing systems and the base elements of which have been formerly separated by individual supports, wherein the base element is now supported and the required spacing is provided by a combination of a leg and a binding element used to mount the leg onto the base element,
Figures 2f and 2g illustrate two embodiments of the kiln furniture members shown in Figures 2a, 2b, 2c, 2d and 2e, wherein the leg and the binding element are detached from the base element,
Figures 3a, 3b, 3c, 3d, 3e and 3f illustrate novel solutions in which the base element is supported and the required spacing is provided merely by a leg mounted onto the base element by means of a binding element,
Figures 3g, 3h and 3i illustrate possible height level offsets for the embodiments shown in Figures 3a, 3b, 3c, 3d, 3e and 3f,
Figures 4a, 4b and 4c illustrate the method of fixing the leg to the base element by gluing, and the positive connection (form-fitting joint) provided by the glue filling out the hollows of the leg and the base element, and the joint created by gluing and the use of the form-fitting binding element fixed to the leg by gluing,
Figures 5a and 5b show the perspective top and bottom plan views of a kiln furniture member that is primarily adapted for firing dishes and that can be placed on ceramic longitudinal supports, wherein an antisticking functional auxiliary element is mounted to the bottom of the base element.

As shown in the figures of the accompanying drawings, the ceramic assembly, in particular a kiln furniture member, according to the present invention may be carried out in several embodiments depending on the particular product to be fired, as well as on the technological and equipment conditions. It is common for all of the ceramic assemblies formed as kiln furniture members with mounted legs that they all comprise a ceramic base element assembled with ceramic auxiliary elements used as spacing legs, wherein, if necessary, the base element and the legs are jointed by means of a glue, ceramic binding elements or a combination thereof. The so formed kiln furniture member with the mounted legs operates reliably and stably, and it does not tend to break into parts, however, it may be manufactured in a more economical way by producing its basic components separately, and in certain cases, it may provide all functions of a conventional kiln furniture member due to an easy replacement of its leg with another leg having a different height. Based on various embodiments of the ceramic assembly according to the invention, one can produce kiln furniture for technical ceramic products and fine ceramic products, for so called H-cassettes used for firing roofing tiles, as well as for kiln furniture members used for firing fancy goods.

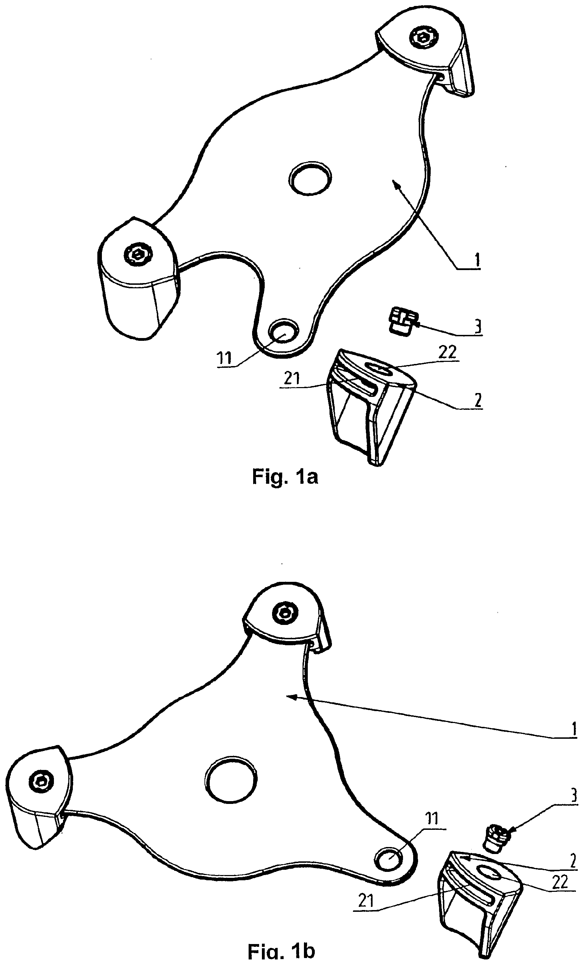

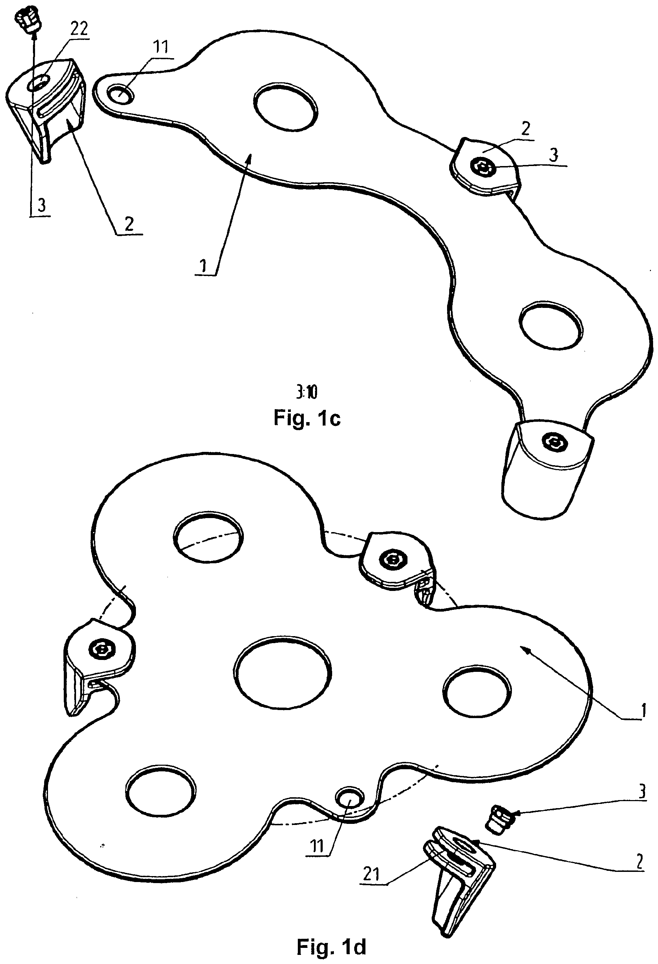

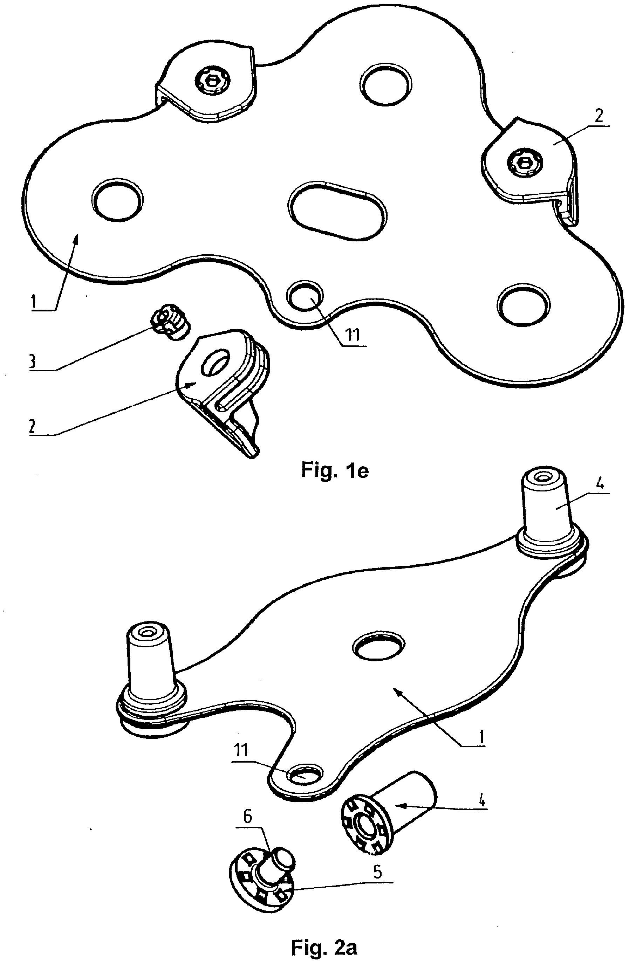

In Figures 1a to 1e, kiln furniture members are shown that have been already used also in existing firing systems, but the base elements 1 of which have been formerly separated by individual supports. As illustrated in Figures la to 1e, the base elements 1 are now supported and the required spacing is provided merely by legs 2 mounted onto the base elements 1 by means of ceramic binding elements, in particular, external threaded screws 3. It is characteristic for the base elements 1 formed by carrier plates having a shape that matches to the shape of the product to be fired, that in the field of dish production, they can be used in racks, which are built by hooking separate supports through the through-holes 11 of the base elements 1. In the ceramic assemblies shown in Figures 1a to 1e, the legs 2 comprise a slot 21 and a plurality of through-holes 22 being perpendicular to said slot 21. The through-holes 11 formed on the circumferential arms of the base element 1 may be aligned to the through-holes 22 of the leg 2 by inserting them into the slot 21 of the leg 2. In such a way, the external threaded screw 3 can be traversed through the upper through-hole 22 of the leg 2 and the through-hole 11 of the base element 1, and it can be screwed into the lower through-hole 22 of the leg 2, said lower through-hole 22 having internal threads. In particular cases, the leg 2 may be fixed to the base element 1 by means of other positive or non-positive connections. The above described construction of the kiln furniture member provides the required stability, while, if necessary, it makes it easy to replace the leg with another leg having a different height, and it further allows to produce the legs from material qualities different from that of the base element corresponding to the different loads. Occasionally, this kind of connection may be further stabilized by gluing, in order to avoid a loosening. After gluing, replacement of the legs is not possibly any more, of course.

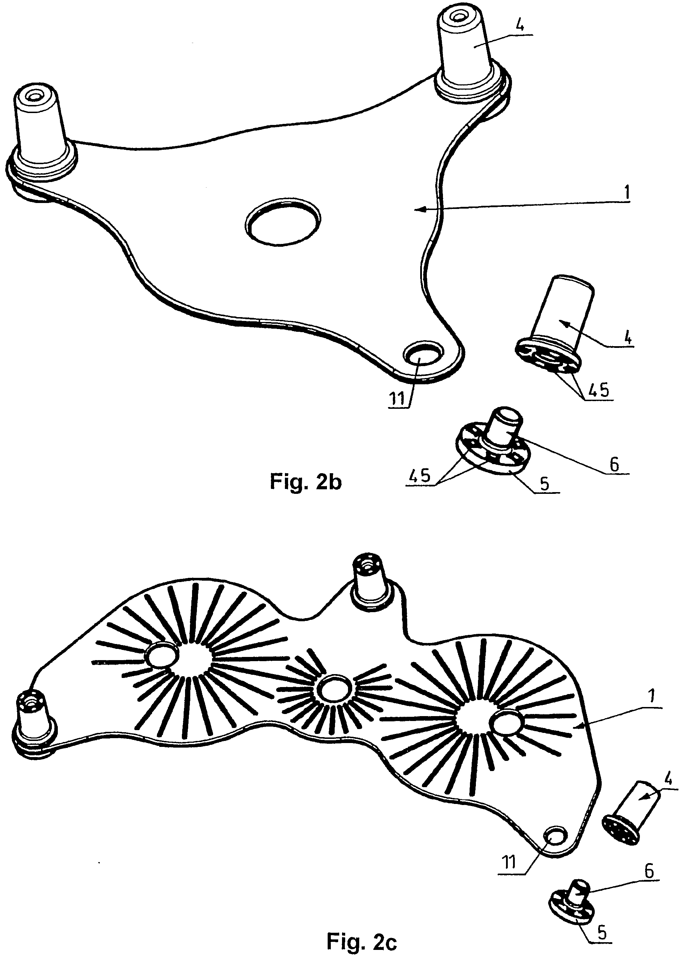

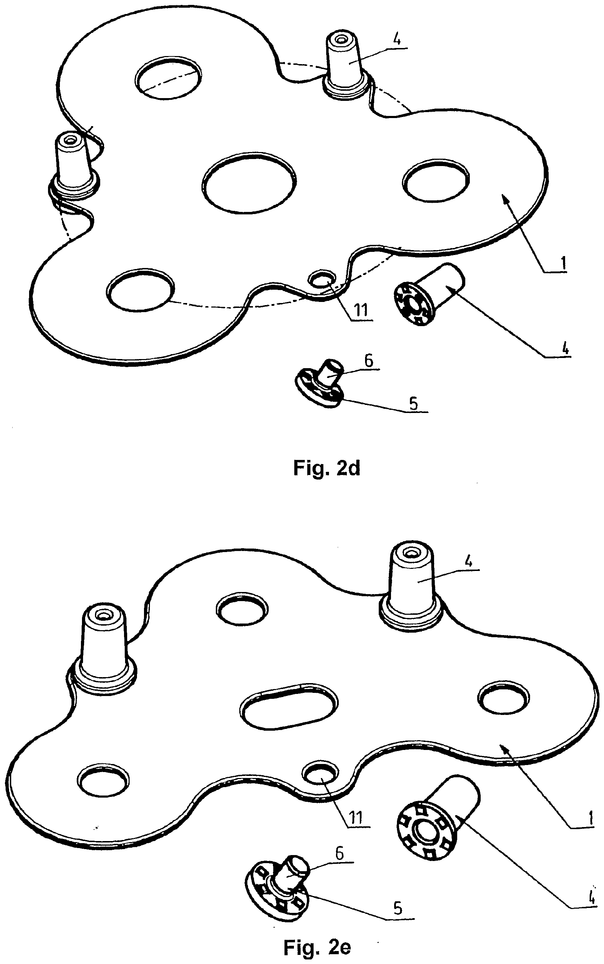

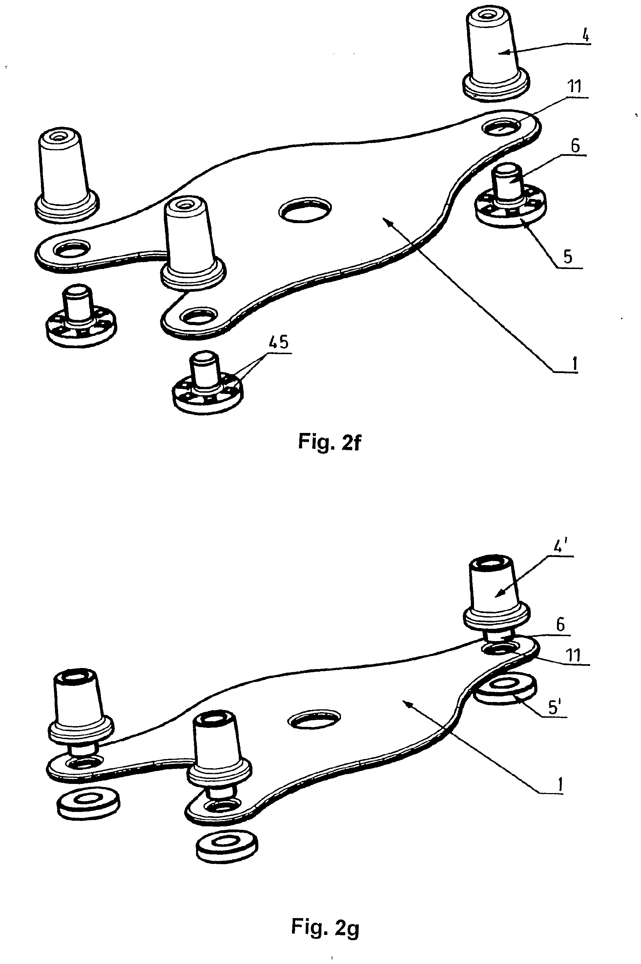

The solution shown in Figures 2a to 2g can also be applied for kiln furniture members that have been already used in existing firing systems, wherein the base elements 1 have been separated by individual supports so far. As illustrated in Figures 2a to 2e, the base element 1 is now supported and the required spacing is provided by a combination of a leg and a ceramic binding element, which fixes the leg to the base element 1. The leg 4 shown in Figures 2a to 2f is formed as a flanged hollow piece having a conical mantle, into the internal threaded hole of which an external threaded central bolt 6 of the binding element forming a disc 5 can be screwed through the through-hole 11 of the base element 1. In Figure 2g, the leg 4' is provided with an external threaded central bolt 6, wherein said bolt 6 can be screwed into an internal threaded hole of a female screw-like disc 5' through the through-hole 11 of the base element 1. Figures 2a to 2g also show that the surfaces of the legs 4, 4' and the discs 5, 5' that are in contact with the base element 1 are provided with antisticking ribs 45 slightly projecting outwards. The conical shape of the legs 4, 4' facilitates stacking, but because of their comparatively large dimension, it is preferred to use the legs 2 shown in Figures 1a to 1e for firing certain products. In some cases, the legs 4, 4' may be fixed to the base element 1 by means of another positive or non-positive connection. If necessary, also this connection may be further stabilized by gluing in order to avoid a loosening.

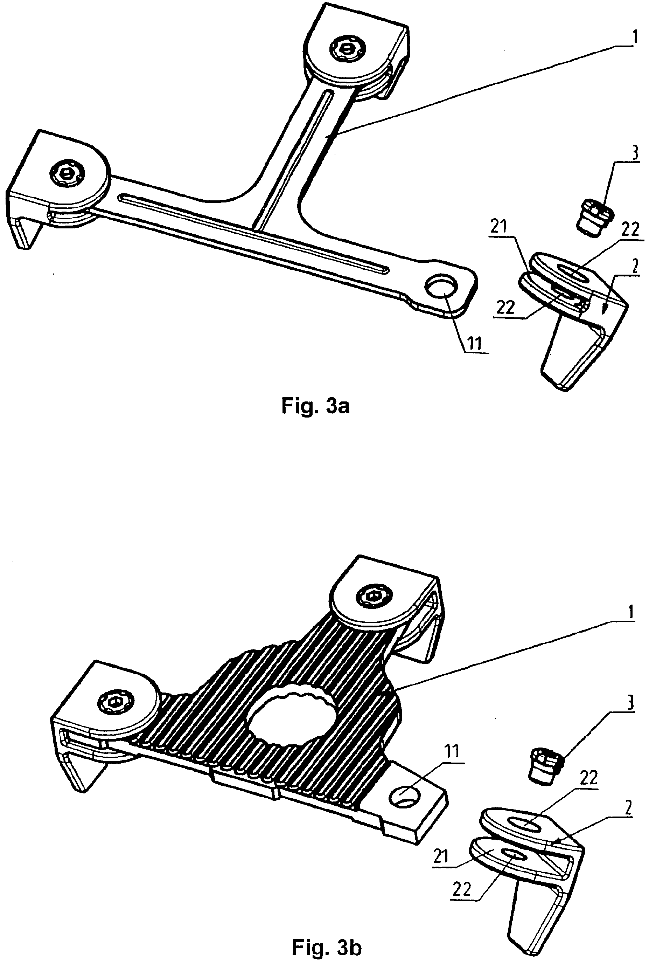

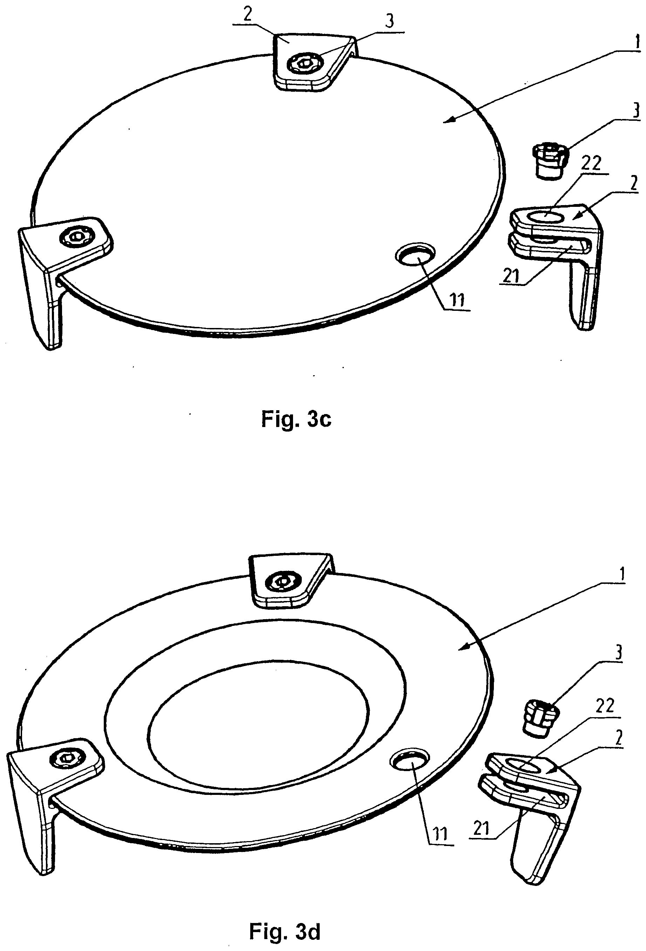

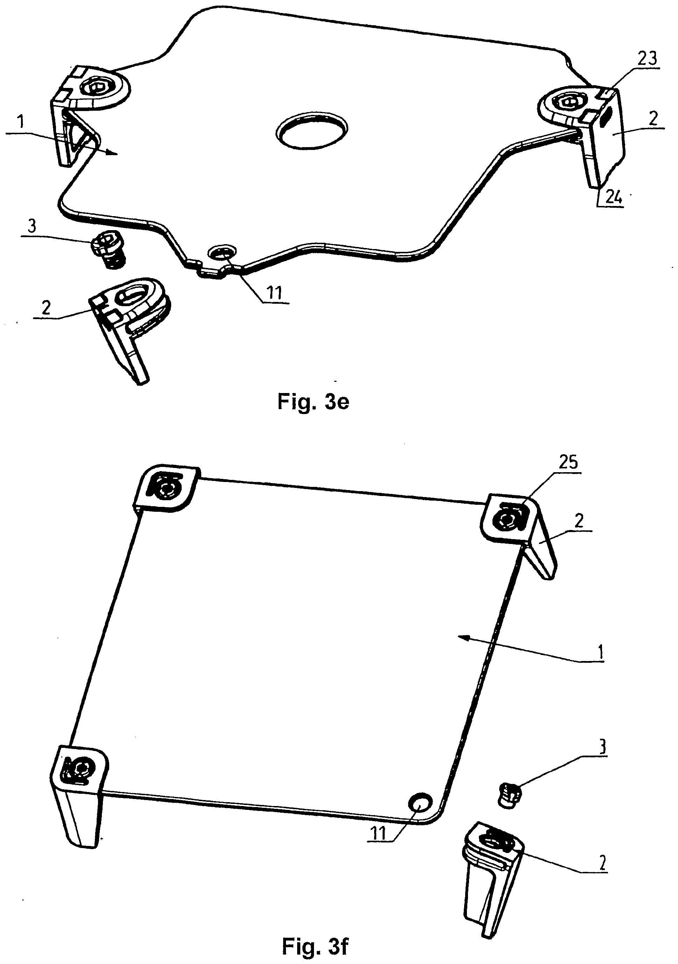

Figures 3a to 3f illustrate novel alternative embodiments, wherein only legs mounted to the base element 1 by means of binding elements are used to support the base element 1 and to provide the required spacing. In these embodiments, similarly to those shown in Figures 1a to 1e, the legs 2 mounted to the base elements 1 are fixed to the base element 1 by means of binding elements in the form of screws 3, wherein the base element 1 itself may have various shapes corresponding to the product to be fired, as it can be clearly seen in the respective figures. It is a common feature of the legs 2 that they are fixed to the base element 1 by means of a threaded, eccentric, positive or non-positive connection, said connection being in cooperation with the binding elements traversing the through-holes 11 of the base element 1. As shown in Figure 3e, in two corners of the top surface of the leg 2 there are provided respective recesses 23 that are adapted to receive complementary projections 24 of the bottom surface of another similar leg 2 imposed on the lower leg 2 when forming a multiple level stack. In the embodiment shown in Figure 3f, the top surface of the legs 2 mounted to the corners of the square shaped base element 1 is provided with a substantially right-angled positioning rib 25 that is used to prevent the legs of an imposed kiln furniture member from displacing. The connection between the base element 1 and the legs 2 may be further stabilized by gluing, if necessary, in order to avoid a loosening.

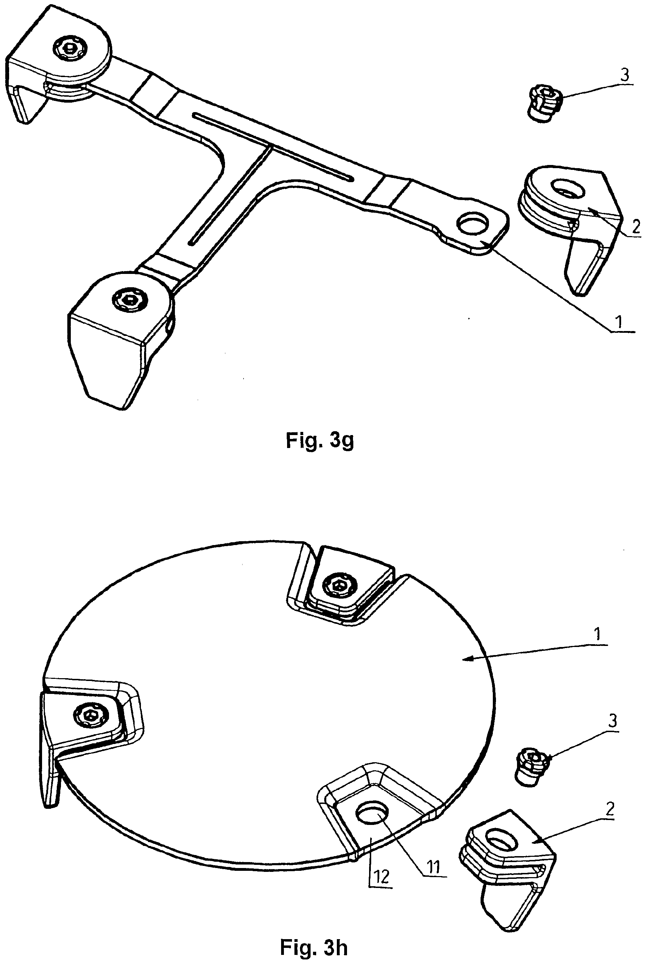

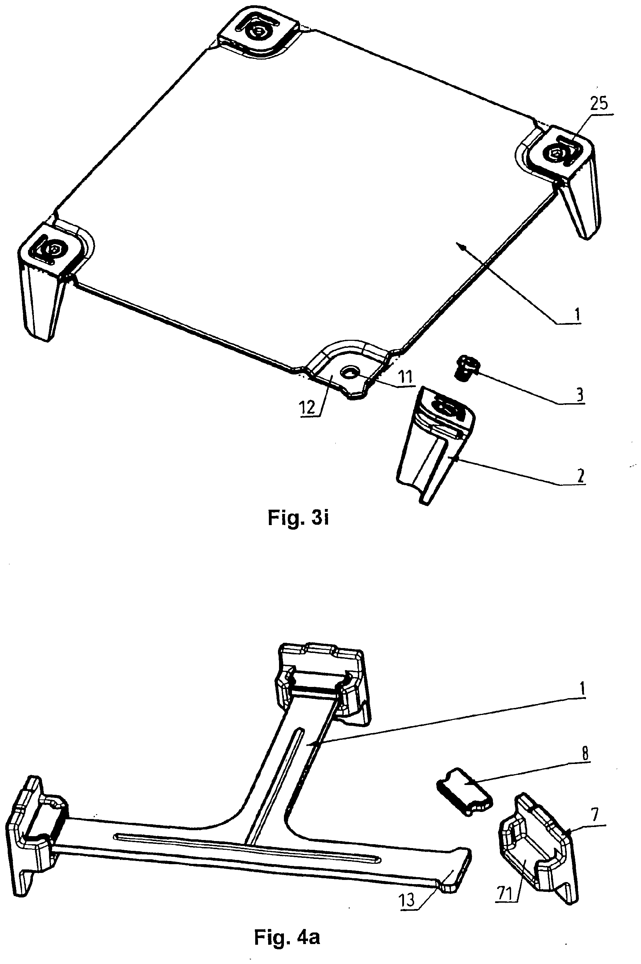

Figures 3g to 3i illustrate examples of level offsetting that may be required in the embodiments shown in Figures 3a to 3f. Figure 3g illustrates a situation wherein the arms of the T-shaped base element 1 are bent in such a way that the inner part of each arm extends on a lower level relative to the outer end thereof. In Figure 3h, the through-holes 11, which are adapted for receiving the legs 2 to be recessed in the base element 1, are arranged in the recesses 12 of the base element 1. A similar arrangement is shown in Figure 3i, where the corners of the square base element 1 are provided with through-holes 11 also formed in the recesses 12.

In the embodiment shown in Figure 4a, the leg 7 is fixed to the base element 1 by means of a glued joint provided merely by a glue in a such a way that the specially shaped leg 7 is provided with a seat 71 for receiving a shaped projection 13 of the base element 1 in a positive (form-fitting) manner, wherein an inset 8 used as a binding element is imposed on the shaped projection 13, said inset 8 having the same contour as the outer contour of the shaped projection 13 and being made of the same material as that of the leg 7. The inset 8, which is covered with a layer of glue on its outer periphery, is fixed to the leg 7 along its periphery in a non-positive (force-fitting) manner by means of the glue.

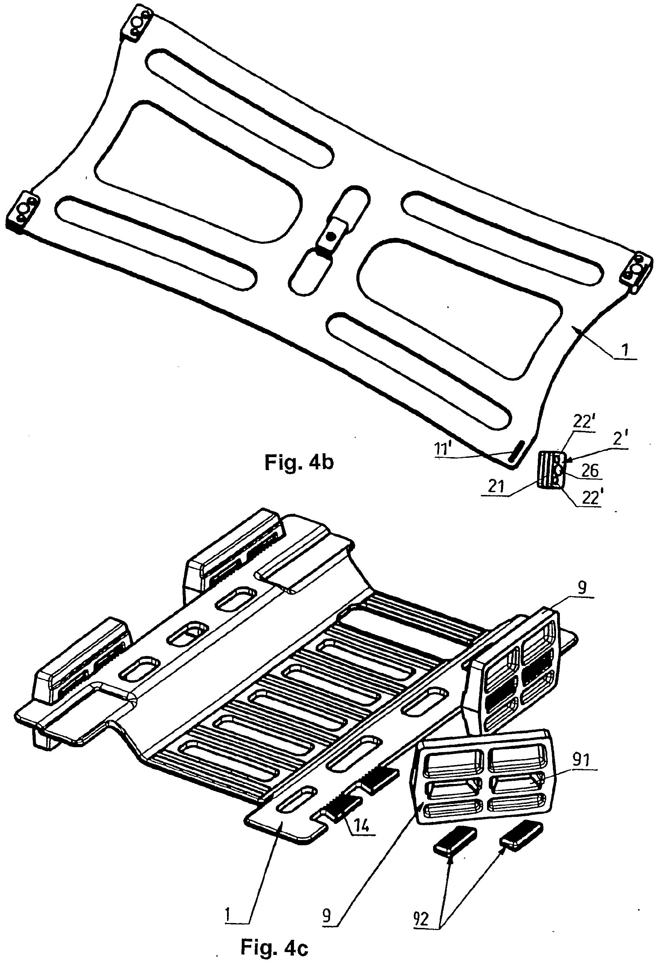

Figure 4b shows an embodiment that is particularly suitable for economic and reliable firing of electronic parts like ceramic capacitors. In prior art methods for firing such parts, a grid support assembly comprising ceramic sticks and sheet-like spacers has been used onto which a thin ceramic plate has been laid and the parts to be fired have been put on said plate. The support assemblies thus obtained, however, have been deformed at high firing temperatures. The ceramic assembly according to the invention eliminates that deficiency. In this special embodiment of the ceramic assembly according to the invention, the base element 1 supporting (also preferably by means of an interposed thin ceramic plate) the parts to be fired comprises weight reducing and ventilation cut-offs, and the ceramic assembly, as well as the legs, is made of a material having both thermal shock resistance and thermal creep resistance in high temperature with high durability, or the combination of such materials. In accordance with this, it is particularly preferred that the structural material of the ceramic assembly is synthetic mullite and/or silicon carbide (SiC), and more particularly the legs are made of mullite, whereas the base element 1 is made of silicon carbide. It is particularly preferred that the silicon carbide assembly is provided with an oxide ceramics cover that contains ZrO₂ in an amount of at least 90%. The ratio of the weight and the effective firing surface of the kiln furniture formed by the ceramic assembly thus obtained is less than 4,0x10⁻³ g/mm². Although legs of different shapes may be used to create multiple level stacks, the arrangement illustrated in Figure 4b is particularly beneficial in cases where legs 2' are mounted to the base element 1, on the one hand, by a glued joint provided by a glue, and on the other hand, by a positive (form-fitting) joint provided by a solidified glue filling out the properly shaped hollows of the legs 2'. In this embodiment, a leg 2' is provided with a slot 21 for receiving a circumferential through-hole 11' of the base element 1 and on its top surface, with a plurality of glue feeding channels 22' opening into the space above the through-hole 11'. Thus, the glue may be fed through said channels 22' into the through-hole 11' of the base element 1 and into the corresponding hole of the leg 2' so as to solidify therein to create a non-positive connection. Additionally, the leg 2' may be provided with positioning cams 26 on its top surface.

As shown in Figure 4c, fixing of the specially shaped leg 9 to the matching base element 1 is carried out by a glued joint and a joint provided by an inset 92 used as a binding element, said inset 92 being glued to the leg 9 and providing a positive and non-positive connection at the same time. In this embodiment, the leg 9 is provided with openings 91 for receiving swallow-tailed side projections 14 of the base element 1 in a positive (form-fitting) manner, wherein said openings 91 are closed with insets 92 serving as binding elements, said insets 92 being fixed by means of gluing and wedging.

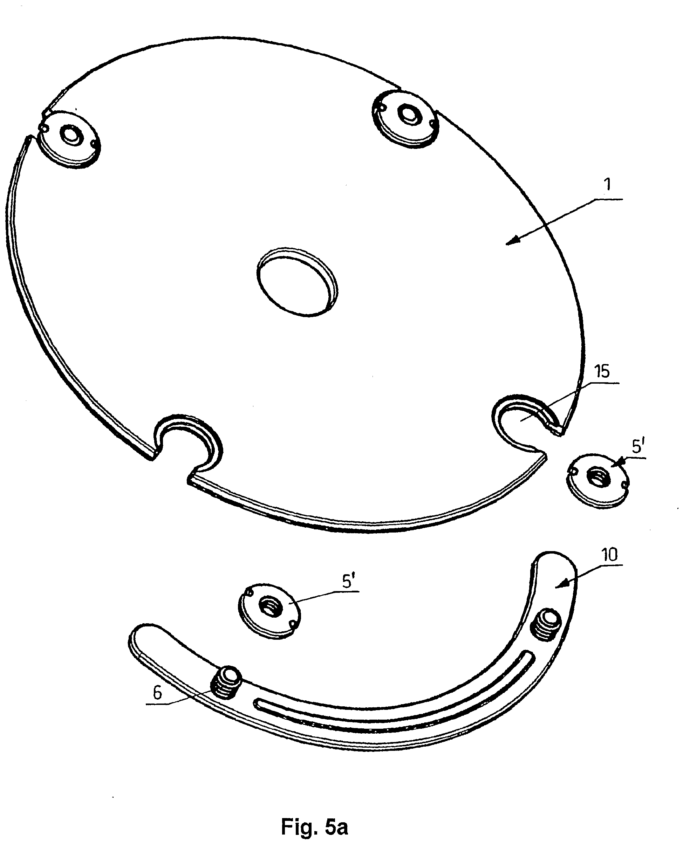

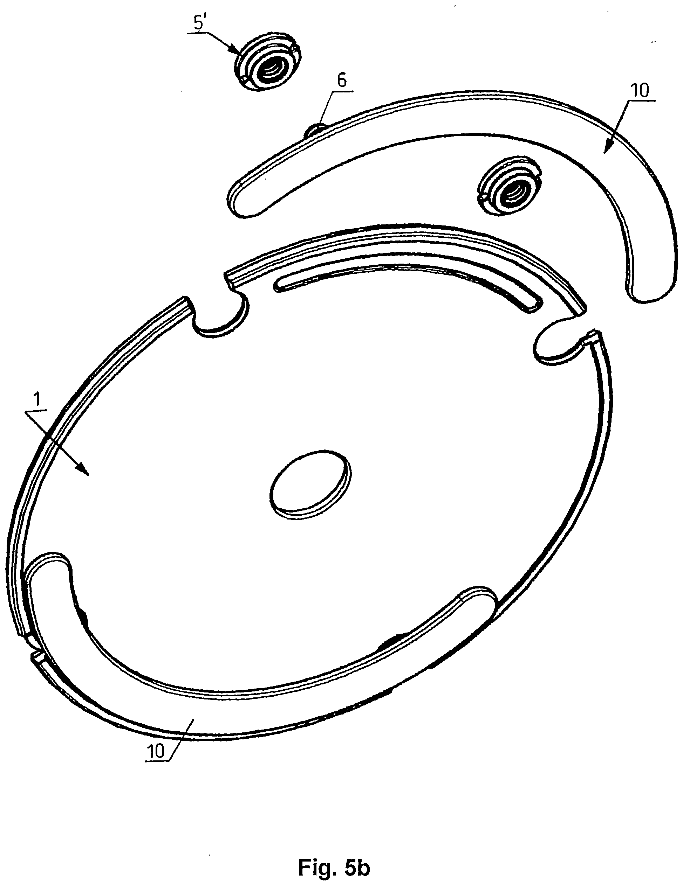

Figures 5a and 5b illustrate a base element 1 of a kiln furniture member made of SiC (silicon carbide) in a top plan view and a bottom plan view. The illustrated base element 1 is primarily suitable for firing dishes and other similarly shaped products. The base element 1 is placed on longitudinal supports also made of SiC or on other similar supports. Since at the operating temperature, a thin viscous glass layer tends to develop on the surface of both of the base element and the longitudinal supports, wherein due to said glass layer, the base element might stick to the longitudinal supports, at least one antisticking ceramic inset 10, as a functional auxiliary element, is mechanically fixed to the bottom of the base element 1 along its periphery and/or to the top of the longitudinal supports (not illustrated). The inset 10 is typically made of mullite-containing, Al₂O₃-containing or ZrO₂-containing oxide ceramics. As these materials are hardly or even not capable of forming a glass phase, just a minimal sticking occurs between the antisticking inset made of the above mentioned materials and the base element or the longitudinal support, both made of SiC, wherein said sticking can be easily released after the high temperature operating cycle. In the embodiments shown in Figures 5a and 5b, two antisticking insets 10 are arranged in opposite locations of the bottom surface of the base element 1, each one of said insets 10 being provided with an external threaded bolt 6 traversing a respective circumferential opening 15 of the base element 1. Onto each of the external threaded bolts 6, an internal threaded female screw-like disc 5' is screwed from the direction of the opposite side of the base element 1.

In order to meet the corresponding requirements, the ceramic assembly according to the invention, which is formed as a kiln furniture member with mounted legs, is to be designed by taking different aspects into account. First of all, the coefficients of thermal expansion of the base element, the leg and the binding element should have substantially the same value in order to avoid development of stresses during the operation due to the different thermal expansions, and thus to avoid breaking or loosening as a result thereof.

The material qualities applied to the kiln furniture according to the invention have to meet the following requirements:
- tolerating the temperatures and the thermal stresses during the firing process,
- not sticking to the products being fired thereon, and, if necessary, being capable of subjecting to an engobing process or being adapted to receive an engobe-substituting inset,
- not damaging the product being fired thereon in any other way (e.g. discoloration, harmful contact reaction),

Some specific examples of the possible materials for a kiln furniture member with mounted legs are introduced hereinafter:
Depending on the operational temperature, the firing conditions and the type of the ceramics to be fired, several different types of material may be used to manufacture the plates, the sheet-like base elements, the legs and the binding elements. These materials may be for example:
- Silicon carbide (SiC) based materials:
   with heat-resistant clay bond,
   with mullite/corundum bond,
   with SiO₂/christobalite bond (OSiC),
   with silicon nitride bond (NSiC),
   recrystallized SiC (RSiC),
   silicon-infiltrated SiC (SiSiC),
   sintered SiC (SSiC),
   sintered SiC in the presence of liquid phase (LPSiC),
- Alumina-silica based materials:
   high quality chamotte,
   natural mullites,
   synthetic, sintered and molten mullites,
   synthetic corundum products, such as alumina, molten and sintered corundum, and
   any combination thereof.
- Cordierite-containing materials:
   cordierite/mullite composites,
   materials containing mainly cordierite.
- Zircon-silicate and zircon-dioxide based materials.

By appropriate selection of the above materials, such as
- silicon carbide based base elements and Al₂O₃ / SiO₂ based legs,
- SiC based base elements and legs,
- cordierite-containing base elements and legs,
- ZrO₂-containing base elements and legs,
the coefficients of thermal expansion may be matched mutually and thus kiln furniture members with mounted legs may be carried out that are suitable for firing several types of ceramics.

The ceramic assemblies formed as kiln furniture with mounted legs, according to the invention, have the following possible applications:
- light-clay ceramics, such as
   hard and soft porcelains
   bone china
   vitreous china
   earthenware
   faience
   majolica
- technical ceramics
   insulating porcelains
   electro-technical materials: cordierite, steatite
   ferrites
   oxide ceramics
- active and passive electronic components
- heavy-clay ceramics
   roofing tiles.

The kiln furniture members with mounted legs according to the invention are light-weight, low energy consuming, long-life ceramic assemblies that may be manufactured easily and cost-effectively. The leg of the kiln furniture member may be easily replaced if necessary. Furthermore, the kiln furniture member has a stable and massive construction, it is easy to manipulate and its suitable design allows to update existing systems. In addition, certain parts of an existing system, in particular the base elements thereof, may be used interchangeably. For each part of the ceramic assembly according to the invention, the most suitable material quality may be selected with respect to their function, thus a significant weight reduction may be achieved, and consequently, a considerable amount of energy may be saved during use.

## Claims

1. Ceramic assembly consisting of a sheet-like ceramic base element (1) and at least one ceramic functional auxiliary element connected to the base element (1), said ceramic assembly being particularly suitable for supporting products to be fired or to be thermally treated in a kiln, wherein the base element (1) is made in the form of a carrier plate of a kiln furniture and is connected with spacing legs (2, 2', 4, 4', 7, 9) as ceramic functional auxiliary elements, **characterized in that**
the base element (1) is connected with the spacing legs (2, 2', 4, 4', 7, 9) in a mechanical way by means of a positive connection and/or a non-positive connection and optional gluing via ceramic binding elements to form an integrated kiln furniture unit.

2. The ceramic assembly of claim 1, **characterized in that**
the spacing legs (2, 2', 4, 4', 7, 9) are connected to the base element (1) at an outer edge of the base element (1), and optionally extend beyond the perpendicular projection of the base element (1) when viewed from the centre of the base element (1).

3. The ceramic assembly of claim 1 or 2, **characterized in that**
the leg (2) comprises a slot (21) for receiving a circumferential through-hole (11) of the carrier plate forming the base element (1) and the leg (2) is further provided with through-holes (22) aligned coaxially with respect to the through-hole (11) of the carrier plate, wherein said through-holes (22) are adapted to receive ceramic binding elements in the form of external threaded screws (3) to be screwed therein.

4. The ceramic assembly of any one of claims 1 to 3, **characterized in that**
the top surface of the leg (2) comprises at least one recess (23) adapted to receive a respective projection (24) formed on the bottom surface of another similar leg (2) imposed thereon.

5. The ceramic assembly of any one of claims 1 to 4, **characterized in that**
the top surface of the leg (2) comprises a positioning rib (25) preventing the displacement of another similar leg (2) imposed thereon.

6. The ceramic assembly of any one of claims 1 to 5, **characterized in that**
the carrier plate forming the base element (1) comprises recesses (12) for receiving the legs (2) to be recessed into the base element (1).

7. The ceramic assembly of claim 1 or 2, **characterized in that**
the leg (4, 4') is in the form of a flanged hollow piece with conical mantle, said hollow piece is coupled by a threaded connection to a ceramic binding element, said ceramic binding element being in the form of a disc (5, 5').

8. The ceramic assembly of claim 7, **characterized in that**
the surfaces of the leg (4, 4') and the ceramic binding element formed as a disc (5, 5') that are in contact with the base element (1), are provided with antisticking ribs (45).

9. The ceramic assembly of claim 1 or 2, **characterized in that**
the leg (7) is provided with a seat (71) for receiving a shaped projection (13) of the base element (1) in a positive (form-fitting) manner, wherein an inset (8) used as a ceramic binding element is imposed on the shaped projection (13), said inset (8) having the same contour as the outer contour of the shaped projection (13) and being made of the same material as that of the leg (7), wherein said inset (8), which is covered with a layer of glue on its outer periphery, is connected to the leg (7) along its periphery by means of a non-positive (force-fitting) connection.

10. The ceramic assembly of claim 1 or 2, **characterized in that**
the base element (1) comprises weight reducing and ventilation cut-offs, and the ceramic assembly and the legs (2, 2', 4, 4') are made of a material having both thermal shock resistance and thermal creep resistance in high temperature with high durability, or the combination of such materials, wherein the ratio of the weight and the effective firing surface of the kiln furniture formed by the ceramic assembly is less than 4,0x10⁻³ g/mm².

11. The ceramic assembly of claim 10, **characterized in that**
the leg (2') comprises a slot (21) for receiving a circumferential through-hole (11') of the base element (1) and is further provided, in its top surface, with a plurality of glue feeding channels (22') opening into the space above said through-hole (11'), wherein a positioning cam (26) is formed on the top surface of the leg (2').

12. The ceramic assembly of claim 1 or 2, **characterized in that**
the leg (9) comprises a plurality of openings (91) for receiving swallow-tailed side projections (14) of the base element (1) in a positive (form-fitting) manner, wherein each one of said openings (91) is closed by a binding element in the form of an inset (92) fixed on its place by means of gluing and wedging.

13. The ceramic assembly of any one of claims 1 to 12, **characterized in that**
the structural material of the base element is synthetic mullite and/or silicon carbide (SiC).

14. The ceramic assembly of claim 13, **characterized in that**
the silicon carbide structural material is provided with an oxide ceramics cover.

15. The ceramic assembly of claim 14, **characterized in that**
the oxide ceramics cover on the silicon carbide structural material contains ZrO₂ in an amount of at least 90%.

16. The ceramic assembly of any one of claims 1 to 15, **characterized in that**
the material of the functional auxiliary elements is selected from the group of silicon carbide based materials, alumina-silica based materials, cordierite-containing materials and zircon-silicate or zircon-dioxide based materials.

## Patentansprüche

1. Keramischer Aufbau, bestehend aus einem blattartigen keramischen Basiselement (1) und mindestens einem mit dem keramischen Basiselement (1) verbundenen keramischen funktionalen Hilfselement, wobei der keramische Aufbau besonders geeignet ist zum Tragen von in einem Brennofen zu brennenden oder thermisch zu behandelnden Gegenständen, wobei das Basiselement (1) in der Form einer Trageplatte eines Brennofenelements hergestellt ist und verbunden ist mit Abstandsfüßen (2, 2', 4, 4', 7, 9) als keramische funktionale Hilfselemente, **dadurch gekennzeichnet, dass**
das Basiselement (1) mit den Abstandsfüßen (2, 2', 4, 4', 7, 9) mechanisch mit Hilfe einer positiven Verbindung und/oder einer nicht positiven Verbindung verbunden ist und wahlweise einem Kleben über keramische Bindeelemente zum Bilden einer ganzheitlichen Brennofenausstattungseinheit.

2. Keramischer Aufbau gemäß Anspruch 1, **dadurch gekennzeichnet, dass**
die Abstandsfüße (2, 2', 4, 4', 7, 9) mit dem Basiselement (1) an einem äußeren Rand des Basiselements (1) verbunden sind, und sich wahlweise über die rechtwinklige Projektion des Basiselements (1) hinaus erstrecken, von der Mitte des Basiselements (1) aus betrachtet.

3. Keramischer Aufbau gemäß Anspruch 1 oder 2, **dadurch gekennzeichnet, dass**
der Fuß (2) einen Schlitz (21) umfasst zum Aufnehmen eines umlaufenden Durchlochs (11) der das Basiselement (1) bildenden Trageplatte und der Fuß (2) zudem mit Durchlöchern (22) ausgestattet ist, die coachsial gegenüber dem Durchloch (11) der Trageplatte ausgerichtet sind, wobei die Durchlöcher (22) dazu angepasst sind, keramische Bindeelemente in der Form von darin einzuschraubenden äußeren Gewindeschrauben (3) aufzunehmen.

4. Keramischer Aufbau gemäß irgendeinem der Ansprüche 1 bis 3, **dadurch gekennzeichnet, dass**
die obere Oberfläche des Fußes (2) mindestens eine Vertiefung (23) umfasst, angepasst zum Aufnehmen einer entsprechenden Auskragung (24), die an der unteren Oberfläche eines weiteren darauf abgesetzten ähnlichen Fußes (2) ausgebildet ist.

5. Keramischer Aufbau gemäß irgendeinem der Ansprüche 1 bis 4, **dadurch gekennzeichnet, dass**
die obere Oberfläche des Fußes (2) eine Positionsrippe (25) umfasst, welche die Verlagerung eines weiteren darauf abgesetzten ähnlichen Fußes (2) verhindert.

6. Keramischer Aufbau gemäß irgendeinem der Ansprüche 1 bis 5, **dadurch gekennzeichnet, dass**
die das Basiselement (1) bildende Trageplatte Vertiefungen (12) aufweist zum Aufnehmen der in das Basiselement (1) einzustellenden Füße (2).

7. Keramischer Aufbau gemäß Anspruch 1 oder 2, **dadurch gekennzeichnet, dass**
der Fuß (4, 4') in der Form eines angeflanschten Hohlstücks mit konischer Überform ist, wobei das Hohlstück über eine Gewindeverbindung mit einem keramischen Bindeelement gekoppelt ist, wobei das keramische Bindeelement in der Form einer Scheibe (5, 5') ist.

8. Keramischer Aufbau gemäß Anspruch 7, **dadurch gekennzeichnet, dass**
die Oberflächen des Fußes (4, 4') und des als Scheibe (5, 5') geformten keramischen Bindeelements, die in Berührung mit dem Basiselement (1) sind, mit Antihaftrippen ausgestattet sind.

9. Keramischer Aufbau gemäß Anspruch 1 oder 2, **dadurch gekennzeichnet, dass**
der Fuß (7) mit einem Sitz (71) zum Aufnehmen einer geformten Projektion (13) des Basiselements (1) in einer positiven (formschlüssigen) Weise ausgestattet ist, wobei ein als keramisches Bindeelement verwendeter Einsatz (8) auf die geformte Projektion (13) aufgesetzt wird, wobei der Einsatz (8) den gleichen Umriss wie der äußere Umriss der geformten Projektion (13) hat und aus dem gleichen Material gemacht ist, wie der Fuß (7), wobei der Einsatz (8), der an seinem äußeren Umfang mit einer Schicht Klebstoff bedeckt ist, entlang seines Umfangs mit dem Fuß (7) über eine nicht positive (kraftschlüssige) Verbindung verbunden ist.

10. Keramischer Aufbau gemäß Anspruch 1 oder 2, **dadurch gekennzeichnet, dass**
das Basiselement (1) gewichtsverringernde und ventilierende Verschnitte umfasst, und dass der keramische Aufbau und die Füße (2, 2', 4, 4') aus einem Werkstoff hergestellt sind, der sowohl Termperaturwechselbeständigkeit als auch thermische Kriechfestigkeit bei hoher Temperatur mit hoher Dauerhaftigkeit hat, oder aus einer Kombination solcher Werkstoffe, wobei das Verhältnis aus Gewicht und effektiver Brennfläche des durch den keramischen Aufbau gebildeten Brennofenelements geringer als 4,0 × 10⁻³ g/mm² ist.

11. Keramischer Aufbau gemäß Anspruch 10, **dadurch gekennzeichnet, dass**
der Fuß (2') einen Schlitz (21) umfasst zum Aufnehmen eines umlaufenden Durchlochs (11') des Basiselements (1), und zudem an seiner oberen Oberfläche mit einer Mehrzahl Klebstoffzufuhrkanäle (22') ausgestattet ist, die sich zum Raum über dem Durchloch (11') hin öffnen, wobei eine Positioniernocke (26) an der oberen Oberfläche des Fußes (2') gebildet wird.

12. Keramischer Aufbau gemäß Anspruch 1 oder 2, **dadurch gekennzeichnet, dass**
der Fuß (9) eine Mehrzahl Öffnungen (91) umfasst zum Aufnehmen von schwalbenschwanzförmigen Seitenprojektionen (14) des Basiselements (1) in einer positiven (formschlüssigen) Weise, wobei jede der Öffnungen (91) durch ein Bindeelement ind er Form eines Einsatzes (92) verschlossen wird, der an seiner Stelle mit Hilfe von Kleben oder Verkeilen fixiert wird.

13. Keramischer Aufbau gemäß irgendeinem der Ansprüche 1 bis 12, **dadurch gekennzeichnet, dass**
der Strukturwerkstoff des Basiselements synthetischer Mullit und/oder Siliciumcarbid (SiC) ist.

14. Keramischer Aufbau gemäß Anspruch 13, **dadurch gekennzeichnet, dass**
der Siliciumcarbid-Strukturwerkstoff mit einer Oxydkeramikbeschichtung ausgestattet ist.

15. Keramischer Aufbau gemäß Anspruch 14, **dadurch gekennzeichnet, dass**
die Oxydkeramikbeschichtung auf dem Siliciumcarbid-Strukturwerkstoff ZrO₂ in einer Menge von mindestens 90% enthält.

16. Keramischer Aufbau gemäß irgendeinem der Ansprüche 1 bis 15, **dadurch gekennzeichnet, dass**
der Werkstoff der funktionalen Hilfselemente ausgewählt ist aus der Gruppe Siliciumcarbid-basierte Werkstoffe, Aluminiumoxyd-Siliciumoxyd-basierte Werkstoffe, cordierithaltige Werkstoffe und Zirkon-Silikat- oder Zirkondioxydbasierte Werkstoffe.

## Revendications

1. Assemblage céramique constitué en un élément de base céramique en forme de feuille (1) et au moins un élément fonctionnel auxiliaire céramique connecté à l'élément de base (1), ledit assemblage céramique étant particulièrement approprié pour supporter des produits à être cuits ou à être traités thermiquement dans un four, dans lequel l'élément de base (1) est fait en forme d'une plaque-support d'un accessoire d'enfournement et est connecté à des corps d'espacement (2, 2', 4, 4', 7, 9) comme éléments fonctionnels auxiliaires céramiques, **caractérisé en ce que**
l'élément de base (1) est connecté aux corps d'espacement (2, 2', 4, 4', 7, 9) d'une manière mécanique par une connexion positive et/ou une connexion non-positive et éventuellement par collage par des éléments de liage céramiques pour former une unité intégrée d'accessoire d'enfournement.

2. Assemblage céramique selon la revendication 1, **caractérisé en ce que**
les corps d'espacement (2, 2', 4, 4', 7, 9) sont connectés à l'élément de base (1) à un bord extérieur de l'élément de base (1), et éventuellement s'étendent à travers la projection perpendiculaire de l'élément de base (1) de la perspective du centre de l'élément de base.

3. Assemblage céramique selon la revendication 1 ou 2, **caractérisé en ce que**
le corps (2) comprend une fissure (21) pour recevoir un trou passant circonférentiel (11) de la plaque-support formant l'élément de base (1) et le corps (2) est en plus équipé de trous passants (22) alignés coaxialement par rapport au trou passant (11) de la plaque-support, dans lequel lesdits trous passants (22) sont adaptés à recevoir des éléments de liage céramiques en forme de vis filetées externes (3) à être vissés là-dedans.

4. Assemblage céramique selon une quelconque des revendications 1 à 3, **caractérisé en ce que**
la surface supérieure du corps (2) comprend au moins une saignée (23) adaptée à recevoir une projection respective (24) formée sur la surface inférieure d'un autre corps similaire (2) imposé là-dessus.

5. Assemblage céramique selon une quelconque des revendications 1 à 4, **caractérisé en ce que**
la surface supérieure du corps (2) comprend un épaulement de positionnement (25) qui prévient le déplacement d'un autre corps similaire (2) imposé là-dessus.

6. Assemblage céramique selon une quelconque des revendications 1 à 5, **caractérisé en ce que**
la plaque-support qui forme l'élément de base (1) comprend des saignées (12) pour recevoir les corps (2) à être reçus dans l'élément de base (1).

7. Assemblage céramique selon la revendication 1 ou 2, **caractérisé en ce que**
le corps (4, 4') est en la forme d'une pièce creuse à brides avec un manteau conique, ladite pièce creuse étant couplée par une connexion filetée à un élément de liage céramique, ledit élément de liage céramique étant en forme d'un disque (5, 5').

8. Assemblage céramique selon la revendication 7, **caractérisé en ce que**
les surfaces du corps (4, 4') et de l'élément de liage céramique formé en disque (5, 5') qui sont en contact avec l'élément de base (1), sont équipées d'épaulements anticollants.

9. Assemblage céramique selon la revendication 1 ou 2, **caractérisé en ce que**
le corps (7) est équipé d'un siège (71) pour recevoir une projection formée (13) de l'élément de base (1) d'une manière positive (par forme), dans lequel un insert (8) utilisé comme un élément de liage céramique est imposé sur la projection formée (13), ledit insert (8) ayant le même contour que le contour extérieur de la projection formée (13) et étant fait du même matériau que celui du corps (7), dans lequel ledit insert (8), qui est couvert d'un couche de colle sur sa périphérie extérieure, est connecté au corps (7) au long de sa périphérie par une connexion non-positive (par adhérence).

10. Assemblage céramique selon la revendication 1 ou 2, **caractérisé en ce que**
l'élément de base (1) comprend des coupures de réduction de poids ou de ventilation, et l'assemblage céramique et les corps (2, 2', 4, 4') sont faits d'un matériau ayant à la fois une résistance au choc thermique et une résistance au fluage thermique à température élevée et avec une durabilité élevée, ou la combinaison de tels matériaux, dans lequel le rapport du poids et da la surface de cuisson effective de l'accessoire d'enfournement formé par l'assemblage céramique est moins de 4,0 × 10⁻³ g/mm².

11. Assemblage céramique selon la revendication 10, **caractérisé en ce que**
le corps (2') comprend une fissure (21) pour accepter un trou passant circonférentiel (11') de l'élément de base et est en plus équipé, sur sa surface supérieure, d'une pluralité de canaux d'approvisionnement de colle (22') qui s'ouvrent vers l'espace au-dessus du-dit trou passant (11'), dans lequel une came de positionnement (26) est formée sur la surface supérieure du corps (2').

12. Assemblage céramique selon la revendication 1 ou 2, **caractérisé en ce que**
le corps (9) comprend une pluralité d'ouvertures (91) pour recevoir des projections de côté en queue de carpe (14) de l'élément de base (1) en une manière positive (par forme), dans lequel chacune desdites ouvertures (91) est fermée à l'aide d'un élément de liage dans la forme d'un insert (92) fixé en sa place par collage et calage.

13. Assemblage céramique selon une quelconque des revendications 1 à 12, **caractérisé en ce que**
le matériau de structure de l'élément de base est la mullite synthétique et/ou le carbure de silicium (SiC).

14. Assemblage céramique selon la revendication 13, **caractérisé en ce que**
le matériau de structure en carbure de silicium est équipé d'une couverture en oxydes céramiques.

15. Assemblage céramique selon la revendication 14, **caractérisé en ce que**
la couverture en oxydes céramiques sur le matériau de structure en carbure de silicium contient du ZrO₂ en une quantité d'au moins 90%.

16. Assemblage céramique selon une quelconque des revendications 1 à 15, **caractérisé en ce que**
le matériau des éléments fonctionnels auxiliaires céramiques est sélectionné parmi le groupe de matériaux à base de carbure de silicium, matériaux à base d'alumine-silice, matériaux contenant de la cordiérite et matériaux à base de zircone-silicate ou de dioxyde de zircone.
